# EUROPÄISCHE PATENTSCHRIFT

(11) **EP 0 547 094 B1**
(45) Veröffentlichungstag und Bekanntmachung des Hinweises auf die Patenterteilung: **13.08.1997**
(21) Anmeldenummer: 91915473.2
(22) Anmeldetag: 05.09.1991
(51) Int. Cl.: H01S 3/08, H01S 3/03

(54) **LASERRESONATOR FÜR LASER-MEDIEN MIT RINGFÖRMIGEM QUERSCHNITT**
LASER RESONATOR FOR LASER MEDIA WITH ANNULAR CROSS-SECTION
RESONATEUR LASER POUR MILIEUX LASER A SECTION TRANSVERSALE ANNULAIRE

(30) Priorität: 05.09.1990 DE 4028170
(43) Veröffentlichungstag der Anmeldung: 23.06.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: HABICH, Uwe, D-5100 Aachen (DE); DU, Keming, D-5100 Aachen (DE); BAUER, Axel, D-4700 Eupen (DE); PLUM, Heinz-Dieter, D-5100 Aachen (DE); LOOSEN, Peter, D-5100 Aachen (DE)
(74) Vertreter: Münich, Wilhelm, Dr.
(86) Internationale Anmeldenummer: DE9100700
(87) Internationale Veröffentlichungsnummer: WO9204751

(56) Entgegenhaltungen:
- WO-A-91/15045
- DE-A- 2 608 830
- DE-A- 3 427 424
- DE-C- 3 515 679
- US-A- 4 446 556
- US-A- 4 551 684
- PATENT ABSTRACTS OF JAPAN, Bd. 8, Nr. 13 (E-222)(1450) 20. Januar 1984 & JP-A-58 178 578
- IEEE JOURNAL OF QUANTUM ELECTRONICS. Bd. QE-22, Nr. 7, Juli 1986, NEW YORK US Seiten 1078 - 1087; C.A. HILL ET AL.: 'Waveguide laser resonators with a tilted mirror' siehe das ganze Dokument

## Beschreibung

### Technisches Gebiet

Die Erfindung bezieht sich auf einen Laserresonator für Laser-Medien mit ringförmigem Querschnitt gemäß dem Oberbegriff des Anspruchs 1. Ein solcher Laserresonator ist aus DE-A-2 608 830 bekannt und ist Gegenstand der älteren Anmeldung WO-A-9 115 045, die Stand der Technik gemäß den Artikeln 54(3) und 158(1) EPÜ darstellt.

### Stand der Technik

Bei Lasersystemen, deren verstärkende Medien eine zylindrische Form haben, können einfache Resonatoren verwendet werden, die aus planen und/oder sphärischen Spiegeln aufgebaut sind.

Bei einer Reihe von Lasersystemen ist jedoch die Verwendung zylinderförmiger Medien nicht möglich oder nicht angezeigt. Derartige Lasersysteme sind beispielsweise Gaslaser mit koaxialer Elektrodenanordnung, Festkörperlaser mit axialer Pumplichtquelle, Flüssigkeits-(Dye-) Laser mit axialer Pumplichtquelle usw. Darüberhinaus ist in manchen Fällen die Verwendung von Medien mit ringförmigem Querschnitt bezüglich Kompaktheit und Preis von Vorteil.

Es ist bislang eine Reihe von Vorschlägen für Laserresonatoren zur Ausnutzung von Medien mit ringförmigem Querschnitt bekannt, keiner dieser Vorschläge befriedigt jedoch vollständig:

In der DE 35 15 679 C1 ist ein CO₂-Laser beschrieben, dessen ringförmiger Resonator aus vier Spiegelelementen, zwei Resonatorendspie-gel sowie zwei Multipass-Spiegel besteht. Für die Ausleuchtung des aktiven Mediums werden in diesem Fall als Multipass-Spiegel sphärische Spiegel eingesetzt.

Dieser bekannte Resonator hat jedoch Nachteile hinsichtlich der Strahlüberdechung des aktiven Mediums und damit des Gesamtwirkungsgrades.

Weitere Resonatoren zur Ausnutzung von Medien mit ringförmigem Querschnitt sind aus der US-PS 4 050 036 sowie einer Reihe von Artikel aus "Applied Optcs" beschrieben. Nur beispielhaft wird auf die Bände 12, S.1940 folgende und 15, S.2137 folgende verwiesen.

Diese Resonatoren haben den gleichen Nachteil wie der aus der DE 35 15 679 C1 bekannte Resonator und/oder sind so kompliziert aufgebaut, daß sie teuer herzustellen bzw. schwierig zu justieren sind.

### Darstellung der Erfindung

Der Erfindung liegt die Aufgabe zugrunde, einen einfach aufgebauten Laserresonator für Laser-Medien mit ringförmigem Querschnitt anzugeben, bei dem der Wirkungsgrad durch eine verbesserte Strahlüberdekkung des Laser-Mediums gegenüber bekannten Lasern erhöht ist.

Eine erfindungsgemäße Lösung dieser Aufgabe ist im Anspruch 1 angegeben.

Besondere Ausführungsarten der Erfindung sind in den abhängigen Ansprüchen angegeben.

Erfindungsgemäß besitzen die Endspiegel eine torusförmige Oberfläche und mindestens ein Endspiegel weist mindestens eine Öffnung auf, durch die der Laserstrahl auskoppelbar ist.

Die Erfindung geht dabei von dem Grundgedanken aus, daß der Energietransport der Strahlung zur Auskoppelöffnung im ringspaltförmigen Resonatorvolumen durch Beugung erfolgt. Zwischen den Torusspiegeln bildet sich ein Strahlungsfeld mit ringförmigem Querschnitt aus. Durch die Öffnung in einem der Spiegel wird an dieser Stelle die Intensität des Strahlungsfeldes stark herabgesetzt. Dieser Teil des Resonators liefert wesentlich kleinere Beugungsbeiträge in die benachbarten Bereiche, als die, die von dort in die Öffnung gebeugt werden. Die Intensität in der Umgebung der Öffnung wird dadurch ebenfalls abgesenkt, so daß durch Beugung ein Netto-Energietransport aus allen Bereichen des Resonators zur Auskoppelöffnung hin erfolgt.

Der erfindungsgemäße Laserresonator kann bei beliebigen Lasern eingesetzt werden, unabhängig davon, ob diese feste, flüssige oder gasförmige Medien verwenden, und erlaubt es, solche ringförmigen Medien effektiv auszunutzen.

Auch können mehr als eine Öffnung verwendet werden.

Die gegenseitige Ausrichtung der Endspiegel weist einen von der parallelen Orientierung abweichenden Verkippwinkel auf, so daß der "Beugungsverlust" und damit die Leistungsauskoppelung gezielt verstärkt werden können. Dabei laufen zwei Strahlenbündel im entgegengesetzten Umlaufsinn auf die Auskoppelöffnung zu, so daß sich zwei eng beieinanderliegende, divergente Ausgangsstrahlen ergeben, die gegebenenfalls durch ein optisches Element, wie ein Prisma "parallel" gerichtet werden können.

### Kurze Beschreibung der Zeichnung

Die Erfindung wird nachstehend anhand von Ausführungsbeispielen unter Bezugnahme auf die Zeichnung exemplarisch beschrieben, in der zeigen:
- Fig. 1a bis 1c: verschiedene Ausführungsbeispiele eines für die Erfindung geeigneten Laserresonators,
- Fig. 1d: einen Querschnitt durch einen bei den Ausführungsbeispielen gemäß Fig.1 und 3 bis 5 verwendeten Laserendspiegel
- Fig. 2: schematisch den Intensitätsverlauf,
- Fig. 3: ein Ausführungsbeispiel der Erfindung mit verkippten Spiegeln,
- Fig. 4 und 5: weitere Ausführungsbeispiele sowie
- Fig. 6: optische Elemente zur Paralellführung divergenter Strahlen.

### Beschreibung von Ausführungsbeispielen

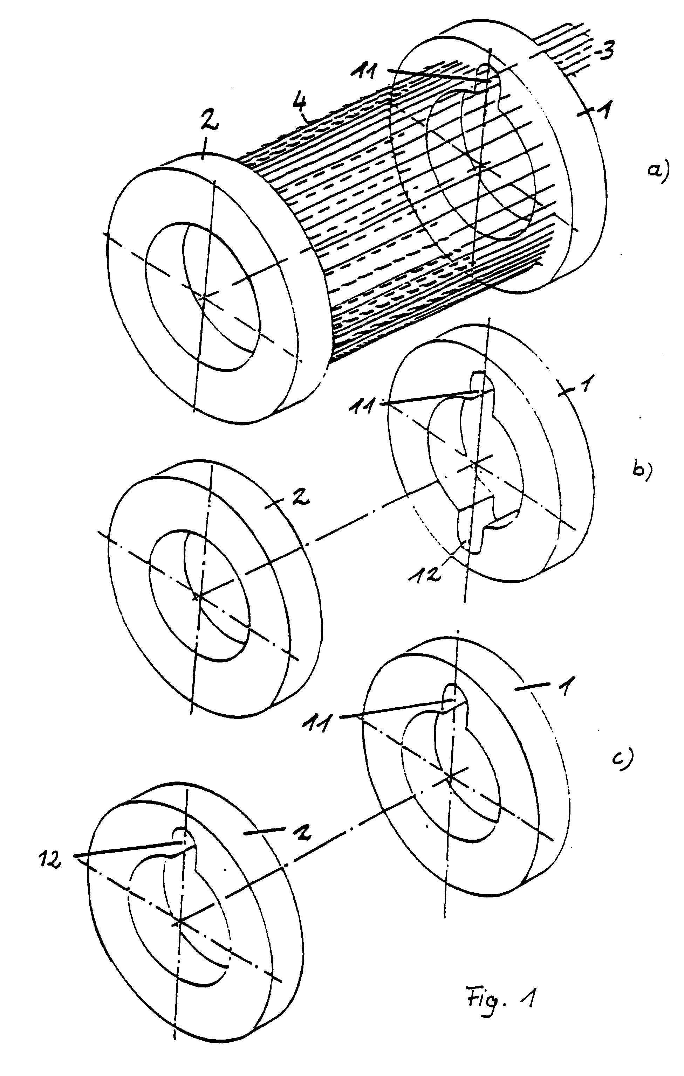

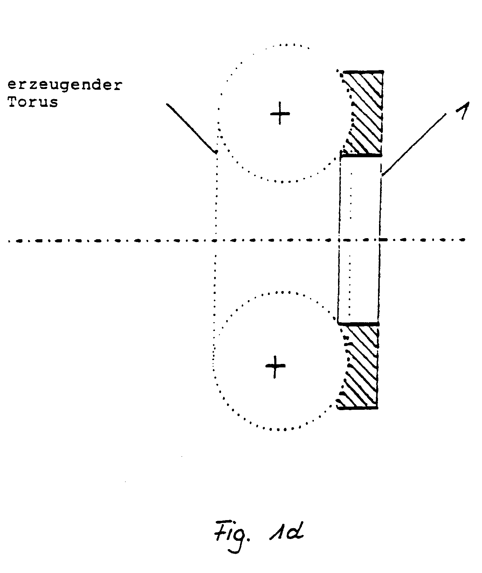

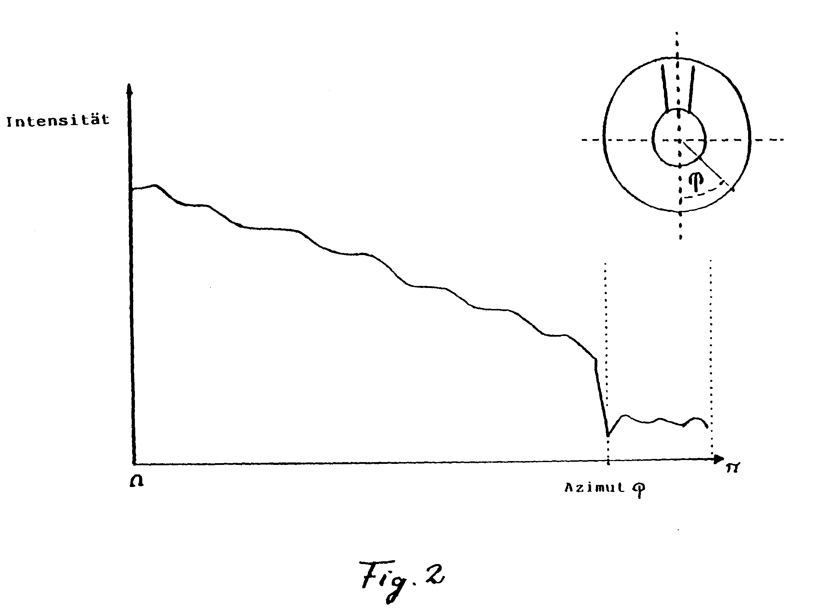

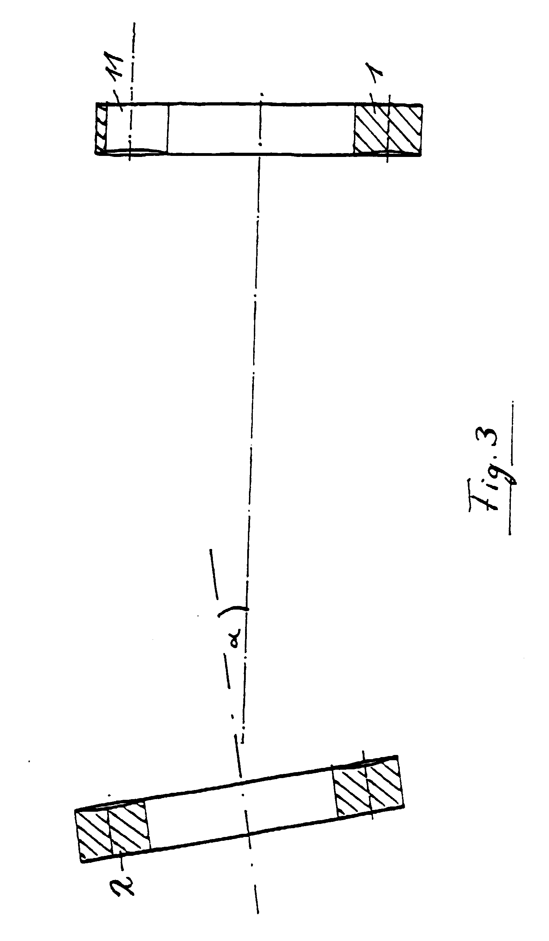

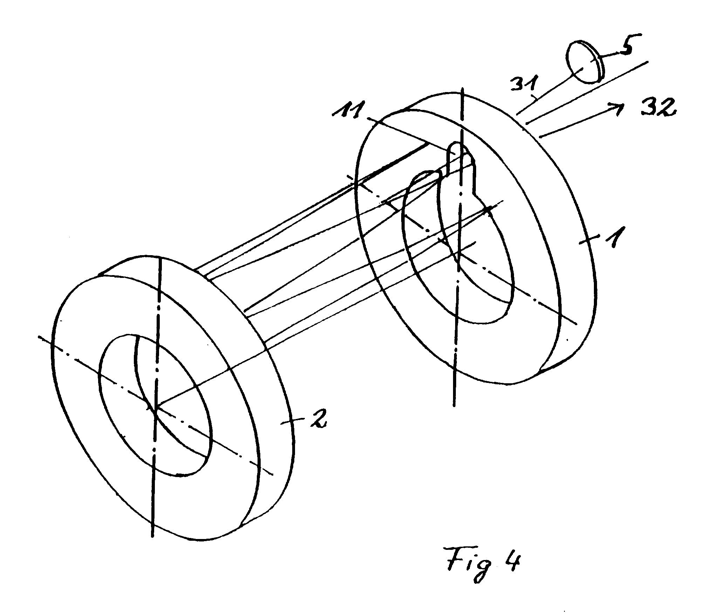

Fig. 1a zeigt einen Laserresonator für ein nicht dargestelltes Lasermedium mit ringförmigem Querschnitt. Der Laserresonator weist zwei Endspiegel 1 und 2 auf, die eine torusförmige Spiegeloberfläche besitzen, die in Fig. 1d im Querschnitt näher erläutert ist und die in den Fig. 1a bis 1c sowie den Fig. 4 und 5 zeichnerisch nicht dargestellt ist.

Bei dem in Fig. 1a gezeigten Ausführungsbeispiel weist der Endspiegel 1 eine Öffnung 11 auf, durch die ein Laserstrahl 3 auskoppelbar ist. Mit 4 ist schematisch der Strahlenverlauf zwischen den Endspiegeln 1 und 2 bezeichnet.

In den folgenden Figuren sind jeweils gleiche oder entsprechende Teile mit den selben Bezugszeichen bezeichnet, so daß auf eine erneute Vorstellung verzichtet wird, und lediglich die Abweichungen der in diesen Figuren dargestellten Ausführungsbeispiele gegenüber dem ersten Ausführungsbeispiel erläutert werden:

Fig. 1b zeigt ein Ausführungsbeispiel, bei dem der Endspiegel 1 zwei Aüskoppel-Öffnungen 11 und 12 aufweist, während Fig. 1c ein Ausführungsbeispiel zeigt, bei dem jeder Endspiegel 1 und 2 eine Auskoppel-Öffnung 11 bzw. 12 aufweist.

Fig. 1d stellt einen Laserendspiegel 1 im Querschnitt dar, dessen spiegelnde Laseroberfläche eine torusförmige Gestalt besitzt. Zur Verdeutlichung der Oberflächenbeschaffenheit ist gepunktet ein die Spiegeloberfläche erzeugender Torus T angedeutet. Der zeichnerischen Einfacheit halber wurde in den Figuren 1a, 1b, 1c, 4 und 5 auf die toroidale Spiegelgestalt zugunsten einer zeichnerisch besser darstellbaren planen Spiegeloberfläche verzichtet.

Fig. 2 zeigt schematisch den Intensitätsverlauf in Abhängigkeit vom Azimutwinkel. Der Ausgangsstrahl ist somit ein zusätzlicher Beugungs"verlust".

Dieser Beugungsverlust wird gezielt durch Verkippen der Spiegel 1 uns 2 verstärkt (Fig. 3), so daß sich eine effektive Leistungsauskopplung ergibt. Diese durch Verkippung bewirkte Erhöhung der Beugungsverluste bewirkt bei den bekannten Resonatoren eine Abnahme der Laserleistung und ist deshalb unerwünscht, in diesem Fall führt sie zu einer Optimierung der ausgekoppelten Leistung. Die Resonatorspiegel werden so verkippt, daß zwei Strahlenbündel in entgegengesetztem Umlaufsinn symmetrisch auf die Auskoppelöffnung zulaufen. Dies führt zu zwei eng beieinander liegenden aber divergenten Ausgangsstrahlen. Weiterhin kann erreicht werden, daß nur ein Strahlenbündel in einem vollen Umlauf zur Auskoppelöffnung gelangt. Dadurch entsteht nur ein Ausgangsstrahl.

Ferner sind bei den gezeigten Ausführungsbeispielen die Krümmungsmittelkreise der Torusspiegel so gewählt, daß die dadurch definierte zylinderförmige "optische Achse" im verstärkenden medium so plaziert ist, daß die Verluste minimiert und die Ausnutzung des Mediums optimiert wird.

Desweiteren ermöglicht der erfindungsgemäße Resonatoraufbau die verschiedensten Varianten, die unterschiedliche Strahlaustrittsformen realisieren:

So werden z.B. durch die Verwendung rotationssymmetrischer Spiegel, die keine Vorzugsrichtung für den Strahlverlauf vorgeben, im allgemeinen zwei Laserstrahlen ausgekoppelt.

Fig. 4 zeigt ein Ausführungsbeispiel, bei dem zwei divergente Teilstrahlen 31 und 32 erzeugt werden, von denen der Strahl 31 nach der Austrittsöffnung 11 im Spiegel 1 durch einen Vollspiegel 5 in sich zurückgeworfen wird.

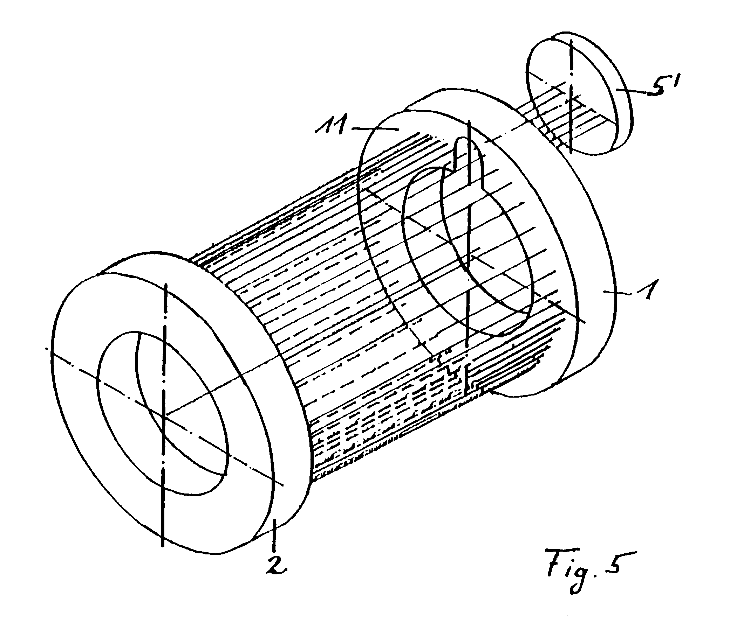

Fig. 5 zeigt ein Ausfuhrungsbeispiel, bei dem in der Auskoppelöffnung 11 ein teiltransmissiver Spiegel 5' zur Rückkopplung eines Teils der Laserleistung vorgesehen ist. Bei genügend großen Verstärkungslängen reicht die verstärkte Spontanemission zur effektiven Ausnutzung des Mediums aus.

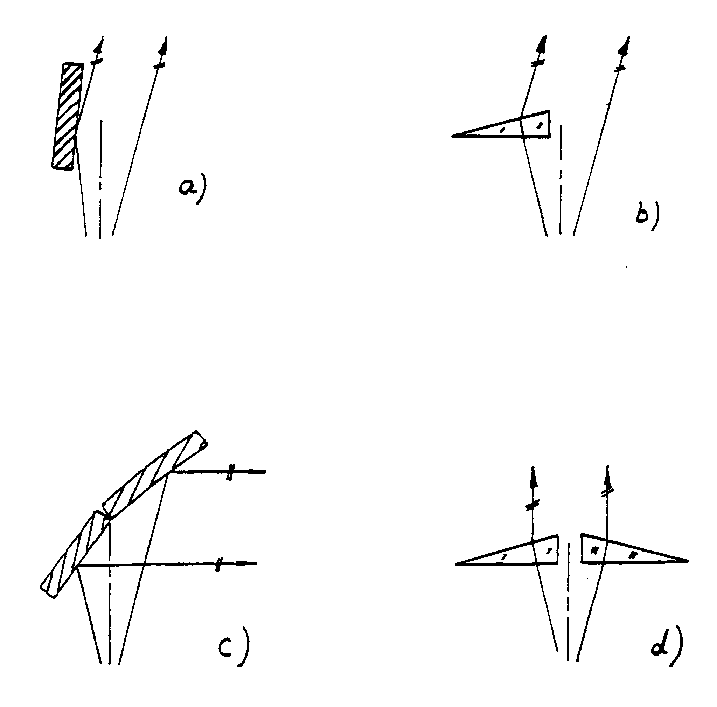

Fig. 6 stellt mögliche Varianten optischer Elemente vor, die für eine Paralellführung divergenter Strahlen geignet sind. So sind einfache Spiegel zur Ablenkung eines Strahls (Fig. 6a) bzw. zur Ablenkung zweier Strahlen (Fig. 6c) ebenso wie brechende Prismen (Fig. 6b, Fig. 6d) für eine derartige Strahlführung einsetzbar.

## Patentansprüche

1. Laserresonator für Lasermedien mit ringförmigem Querschnitt, der zwei ringförmige Endspiegel (1,2) aufweist, deren spiegelnde Oberflächen jeweils eine Kontur aufweisen, deren Form geometrisch durch einen einbeschriebenen Torus definiert ist,
dadurch **gekennzeichnet**,
- daß wenigstens ein Endspiegel (1) mindestens eine Öffnung (11, 12) aufweist, durch die der Laserstrahl (3) auskoppelbar ist, und
- daß die gegenseitige Ausrichtung der Endspiegel (1,2) einen von der parallelen Orientierung abweichenden Verkippwinkel dergestalt aufweist, daß am Ort der Öffnung (11) der Abstand der Spiegel (1,2) am größten ist.

2. Laserresonator nach Anspruch 1,
dadurch **gekennzeichnet**, daß die Krümmungsmittelkreise der beiden Torusspiegel (1,2) eine Verbindungsfläche der Scheitelkreise der Torusspiegel definieren, die im Lasermedium verläuft.

3. Laserresonator nach Anspruch 1 oder 2,
dadurch **gekennzeichnet**, daß in beiden Spiegeln (1,2) Öffnungen (11,12) vorgesehen sind.

4. Laserresonator nach einem der Ansprüche 1 bis 3,
dadurch **gekennzeichnet**, daß in einem Spiegel (1) zwei Öffnungen (11,12) vorgesehen sind.

5. Laserresonator nach einem der Ansprüche 1 bis 4,
dadurch **gekennzeichnet**, daß im Strahlengang nach wenigstens einer Öffnung (11) ein Endspiegel (5,5') vorgesehen ist.

6. Laserresonator nach Anspruch 1,
dadurch **gekennzeichnet**, daß durch ein optisches Element die durch gegensinnigen Umlauf erzeugten divergenten Ausgangsstrahlen (31,32) parallel ausrichtbar sind.

7. Laserresonator nach Anspruch 6,
dadurch **gekennzeichnet**, daß das optische Element reflektierend oder brechend ist.

## Claims

1. A laser resonator for laser media with an annular cross section which is provided with two annular end mirrors (1, 2), the reflecting surfaces of which are provided with a contour the shape of which is geometrically defined by an inscribed torus,
characterized in that
at least one end mirror (1) is provided with at least one opening (11, 12) through which the laser beam (3) can be coupled out, and
that the mutual alignment of the end mirrors (1, 2) has a tilting angle, which deviates from the parallel orientation, in such a form that the distance from said mirrors (1, 2) is the greatest at the site of said opening (11).

2. A laser resonator according to claim 1,
characterized in that
the center circles of curvature of both tours mirrors (1, 2) define a connecting surface of the apex circles of the torus mirrors, which surface runs in the laser medium.

3. A laser resonator according to claim 1 or 2,
characterized in that
openings (11, 12) are provided in both said mirrors (1, 2).

4. A laser resonator according to one of the claims 1 to 3,
characterized in that
tow openings (11, 12) are provided in one mirror (1).

5. A laser resonator according to one of the claims 1 to 4,
characterized in that
an end mirror (5, 5') is provided in the beam path behind at least one opening (11).

6. A laser according to claim 1,
characterized in that
the divergent output beams (31, 32) generated by running in opposite directions are aligned in parallel by one optical element.

7. A laser resonator according to claim 6,
characterized in that
said optical element is reflecting or refracting.

## Revendications

1. Résonateur laser pour milieux laser à section transversale annulaire, comportant deux miroirs d'extrémité annulaires (1, 2) dont les surfaces de miroir présentent respectivement un contour dont la forme est définie géométriquement par un tore inscrit, caractérisé en ce que
- au moins un miroir d'extrémité (1) présente au moins une ouverture (11, 12) par laquelle le rayon laser (3) peut être désaccouplé et en ce que
- l'alignement réciproque des miroirs d'extrémité (1, 2) présente un angle de basculement s'écartant de l'orientation parallèle de telle sorte qu'à l'emplacement de l'ouverture (11), la distance entre les miroirs (1, 2) est la plus grande.

2. Résonateur laser selon la revendication 1, caractérisé en ce que les deux centres de courbure des deux miroirs toriques (1, 2) définissent une surface de raccordement des cercles verticaux des miroirs toriques qui s'étendent dans le milieu laser.

3. Résonateur laser selon la revendication 1 ou 2, caractérisé en ce que dans les deux miroirs (1, 2) sont prévues des ouvertures (11, 12).

4. Résonateur laser selon l'une des revendications 1 à 3, caractérisé en ce que dans un miroir (1) sont prévues deux ouvertures (11, 12).

5. Résonateur laser selon l'une des revendications 1 à 4, caractérisé en ce que dans la marche des rayons après au moins une ouverture (11) est prévu un miroir d'extrémité (5, 5').

6. Résonateur laser selon la revendication 1, caractérisé en ce que les rayons de sortie divergents produits par une révolution en sens contraire peuvent être alignés parallèlement grâce à un élément optique.

7. Résonateur laser selon la revendication 6, caractérisé en ce que l'élément optique est réfléchissant ou réfringent.
